# DEMANDE DE BREVET EUROPEEN

(11) **EP 1 780 397 A1**
(43) Date de publication de la demande: **02.05.2007**
(21) Numéro de dépôt: 06301040.9
(22) Date de dépôt: 11.10.2006
(51) Int. Cl.: F02M 31/12

(54) **Procédé de commande d'un élément de chauffage d'une chambre de combustion d'un moteur diesel**

(30) Priorité: 26.10.2005 FR 0553257
(71) Demandeur: Peugeot Citroen Automobiles SA, 78140 Vélizy-Villacoublay (FR)
(72) Inventeur: Massieux, Michael, 51000 Chalons en Champagne (FR)
(74) Mandataire: Ménès, Catherine

(57) **Abrégé**

La présente invention a pour objet un procédé de commande d'un élément de chauffage d'une chambre de combustion d'un moteur Diesel comportant au moins un ensemble de moyens aptes à déterminer la phase du cycle dans ladite chambre, caractérisé en ce que la phase est un paramètre de commande de l'élément de chauffage.

## Description

L'invention concerne des perfectionnements aux moteurs Diesel et plus précisément un procédé d'optimisation de leur fonctionnement. L'invention se rapporte à un procédé de commande d'un élément de chauffage d'une chambre de combustion de moteur Diesel.

Dans un moteur Diesel à quatre temps, au cours du premier temps du cycle de combustion, seul de l'air est aspiré dans les cylindres, puis cet air est comprimé au cours du deuxième temps. La température finale moyenne de l'air ainsi comprimé est comprise entre 100 et 900°C, en fonction notamment de la température de l'air extérieur, de la température moyenne du cylindre avant l'aspiration d'air frais et de la quantité de carburant injecté. Un peu avant la fin du deuxième temps du cycle ou au tout début du troisième temps, une pompe d'injection pulvérise une certaine quantité de gazole, proportionnelle au régime du moteur, dans la chambre de combustion du cylindre. La durée de cette injection est de quelques millisecondes. Elle varie en fonction du régime et du couple du moteur. Du fait de la température élevée de l'air qui s'y trouve déjà, le gazole s'enflamme spontanément visant à atteindre un combustion parfaite. Toutefois, cette combustion ne se produit pas instantanément au moment de l'arrivée du gazole dans la chambre mais après un intervalle de temps de l'ordre de la milliseconde. Cela, parce que les gouttelettes de gazole pulvérisé, injectées dans la chambre de combustion, doivent tout d'abord se mélanger intimement à l'air chaud et être vaporisées avant de pouvoir s'enflammer. L'intervalle de temps entre les instants de début d'injection et d'ignition est appelé retard à la combustion. Des solutions connues de l'art antérieures et matérialisées par des bougies dites de pré/post chauffage ont été élaborées pour réchauffer l'air admis dans la chambre de combustion. Ainsi, ces bougies permettent avant le démarrage du moteur de réchauffer la chambre de combustion, cette opération étant appelée préchauffage, et lors du démarrage du moteur de chauffer l'air admis dans lesdites chambres, cette opération étant appelée post chauffage.

Traditionnellement, le post chauffage a toujours consisté à utiliser les bougies de pré/post chauffage en continu lors du démarrage du moteur à une température voisine de 950-1000°C, occasionnant ainsi une consommation d'énergie non négligeable. De récents développements sur le post chauffage ont abouti à l'apparition de bougies en céramiques qui, chauffées de manière discontinue et à une température de 1300°C admettent un rendement énergétique supérieur. Le chauffage discontinu consiste à piloter les bougies suivant une certaine fréquence qui permet d'avoir au démarrage 75% des bougies sous tension en permanence. Si cette stratégie améliore globalement le rendement, il n'en reste pas moins que le post chauffage aléatoire de la chambre de combustion n'est pas effectué toujours à bonne escient, puisque dans certains cas ce n'est pas l'air admis dans la chambre de combustion qui est réchauffé, mais les gaz d'échappement. C'est pourquoi, notre invention a pour finalité de palier tout ou partie des inconvénients développés précédemment.

Plus précisément, l'invention a pour objet un procédé de commande d'un élément de chauffage d'une chambre de combustion d'un moteur Diesel comportant au moins un ensemble de moyens aptes à déterminer la phase du cycle dans ladite chambre, caractérisé en ce que la phase du cycle est un paramètre de commande de l'élément de chauffage.

Selon certaines caractéristiques, l'élément de chauffage est activé au début de la phase d'admission du cylindre.

Selon d'autres caractéristiques, le début de la phase d'admission du cylindre est déterminée par :
- la position angulaire des arbres à cames du cylindre ou,
- la position angulaire du vilebrequin ou,
- la position des soupapes d'admission du cylindre.

Selon d'autres caractéristiques, l'élément de chauffage est activé durant une durée inférieure ou égale à la durée de la phase d'admission du cylindre et en fonction d'une cartographie liée au régime du moteur.

Selon d'autres caractéristiques, l'élément de chauffage est activée durant une durée égale à la durée de la phase d'admission additionnée de tout ou partie de la durée de la phase de compression et en fonction d'une cartographie liée au régime du moteur.

Selon d'autres caractéristiques, l'alimentation de l'élément de chauffage est interdite :
- Si la température de l'eau dans la culasse est supérieure à une valeur seuil ou,
- Si le régime du moteur est supérieur à une valeur seuil ou,
- Si la charge du moteur est supérieure à une valeur ou,
- Si la température de l'air ambiant est supérieure à une valeur ou,
- la pression atmosphérique est supérieure à une valeur.

Selon d'autres caractéristiques, l'alimentation de l'élément de chauffage est coupée pendant toute la durée de la phase d'échappement du cylindre.

Selon d'autres caractéristiques, l'alimentation de l'élément de chauffage est coupée pendant toute la durée de la phase de détente du cylindre.

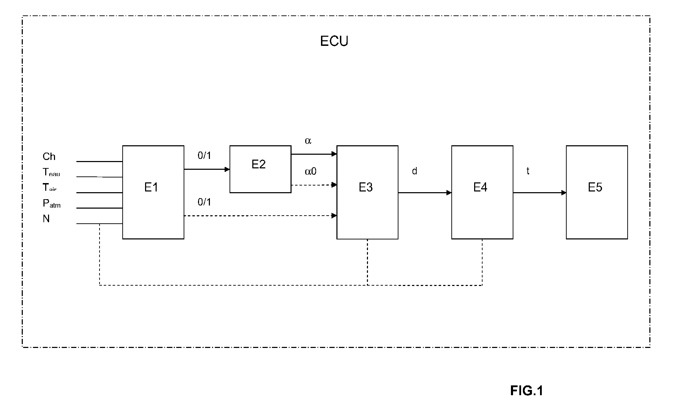

D'autres caractéristiques et avantages de l'invention ressortiront clairement de la description qui va suivre, à titre indicatif et nullement limitatif, en référence à l'unique figure 1 en annexe qui représente un mode préféré du procédé de pilotage de l'élément de chauffage conforme à l'invention. Dans ce mode préféré, de l'élément de chauffage est une bougie de pré post chauffage utilisée dans sa fonction de post chauffage, et donc appelée bougie de post chauffage.

De manière générale, le principe du procédé de pilotage des bougies de post chauffage conforme à l'invention a pour finalité de mettre sous tension chacune des bougies de post chauffage au moment opportun, c'est à dire lorsque débute la phase d'admission dans le cylindre. Selon notre variante préférée, le procédé de pilotage est appliqué à chacune des bougies de post chauffage et comporte en premier lieu une première étape E1 qui consiste à vérifier que les conditions de post chauffage sont réunies. Plus précisément, il s'agit de vérifier que le régime du moteur N, la charge du moteur Ch, la température de l'eau Tₑₐᵤ dans la culasse, la température de l'air ambiant Tₐᵢᵣ, la pression atmosphérique Pₐₜₘ, sont en deçà d'une valeur seuil déterminée au préalable, à savoir respectivement Nₘₐₓ, Chₘₐₓ, Tₑₐᵤ₋ₘₐₓ Tₐᵢᵣ₋ₘₐₓ, Pₐₜₘ₋ₘₐₓ. Au delà de ces valeurs seuil, l'alimentation des bougies de post chauffage est interdite. Cette étape E1 constitue une sécurité qui permet d'une part d'éviter de post chauffer si cela n'est pas nécessaire et d'autre part de limiter la température dans la chambre de combustion en deçà d'un seuil au delà duquel le moteur pourrait être endommagé. L'étape suivante E2 consiste à acquérir la position angulaire α de l'arbre à cames du cylindre afin de déterminer, lors de l'étape suivante E3 et moyennant le régime N du moteur, à quelle échéance d débute la phase d'admission dans le cylindre. Suivant une autre variante, l'acquisition de la position angulaire α de l'arbre à cames du cylindre peut être remplacé par l'acquisition de la position angulaire β du vilebrequin, ou bien l'acquisition de la position π des soupapes d'admission du cylindre. En effet, l'acquisition des positions précitées permet de déterminer en prenant en compte le régime N du moteur, quand va débuter la phase d'admission dans chaque cylindre. De plus, suivant encore une autre variante, l'acquisition des positions précitées n'est pas nécessaire à chaque cycle. En effet, il est possible de déterminer le début de chaque phase d'admission successive pour chaque cylindre en se basant sur l'acquisition d'une seule valeur de la position angulaire de l'arbre à cames au démarrage, soit α₀, et en utilisant le régime N du moteur pour calculer les dates auxquelles débutent les phases d'admission successives.

L'étape suivante E4 consiste à calculer la durée t pendant laquelle la bougie de post chauffage doit être alimentée. De manière générale, il est avantageux de choisir cette durée t égale à la durée de la phase d'admission. Ainsi, pendant toute la phase pendant laquelle l'air frais est admis dans la chambre de combustion, la bougie de post chauffage remplit son rôle d'élément chauffant. La durée t est calculée principalement en fonction d'une cartographie liée au régime N du moteur.

On conçoit bien sûr que pour des conditions de températures de l'air ambiant particulièrement basses, la durée t', pendant laquelle la bougie de post chauffage doit être alimentée, doit être plus longue. On peut alors continuer à chauffer pendant tout ou partie de la phase de compression. La durée t' est calculée principalement en fonction d'une cartographie liée au régime N du moteur.

L'étape E5 consiste en une étape d'activation d'un boîtier d'alimentation de la bougie de post chauffage. Cette alimentation du boîtier s'effectue suivant une sortie en Pulse Width Modulation dite PWM. Par sécurité, il est avantageux de couper pendant toute la durée au moins de la phase d'échappement et éventuellement de la phase de détente l'alimentation de la bougie de post chauffage. En effet, ceci évite de réchauffer les gaz d'échappement et par voie de conséquence de générer des oxydes d'azote.

Avantageusement, le procédé de commande des bougies de post chauffage est intégré dans l'unité de commande ECU du moteur Diesel.

Ainsi, l'invention permet d'alimenter les bougies de post chauffage suivant une durée minimum tout en obtenant un chauffage maximum. Des essais ont confirmé un abaissement de la température moyenne de l'élément de chauffage en fonctionnement, ce qui permet d'augmenter sa longévité. D'autres essais ont confirmé une réduction de la consommation de courant, due à la réduction de la durée de post chauffage pouvant aller jusqu'à 47% ainsi qu'une réduction de la charge sur le réseau électrique.

## Revendications

1. Procédé de commande d'un élément de chauffage d'une chambre de combustion d'un moteur Diesel, le moteur comportant au moins un ensemble de moyens aptes à déterminer la phase du cycle de combustion dans ladite chambre, **caractérisé en ce que** l'élément chauffant est activé de façon discontinue lors d'un cycle de combustion, avec une loi de commande tenant compte de la phase du cycle de combustion.

2. Procédé de commande, selon la revendication 1, **caractérisé en ce que** l'élément de chauffage est activé au début de la phase d'admission.

3. Procédé de commande, selon la revendication précédente, **caractérisé en ce que** le début (d) de la phase d'admission du cylindre est déterminée par :
- la position angulaire (α) des arbres à cames du cylindre ou,
- la position angulaire (β) du vilebrequin ou,
- la position (π) des soupapes d'admission du cylindre.

4. Procédé de commande, selon l'une quelconque des revendications précédentes, **caractérisé en ce que** l'élément de chauffage est activé durant une durée (t) inférieure ou égale à la durée de la phase d'admission.

5. Procédé de commande, selon la revendication précédente, **caractérisé en ce que** l'élément de chauffage est activé durant une durée (t) en fonction d'une cartographie liée au régime (N) du moteur.

6. Procédé de commande, selon l'une quelconque des revendications précédentes, **caractérisé en ce que** l'élément de chauffage est activé durant une durée (t') égale à la durée de la phase d'admission additionnée de tout ou partie de la durée de la phase de compression.

7. Procédé de commande, selon la revendication précédente, **caractérisé en ce que** l'élément de chauffage est activé durant une durée (t') en fonction d'une cartographie liée au régime (N) du moteur.

8. Procédé de commande, selon l'une quelconque des revendications précédentes, **caractérisé en ce que** l'alimentation de l'élément de chauffage est interdite :
- Si la température de l'eau (Tₑₐᵤ) dans la culasse est supérieure à une valeur (Tₑₐᵤ₋ₘₐₓ) ou,
- Si le régime du moteur (N) est supérieur à une valeur (Nₘₐₓ) ou,
- Si la charge du moteur (Ch) est supérieure à une valeur (Chₘₐₓ ou,
- Si la température de l'air ambiant (Tₐᵢᵣ) est supérieure à une valeur (Tₐᵢᵣ₋ₘₐₓ) ou,
- la pression atmosphérique (Pₐₜₘ) est supérieure à une valeur (Pₐₜₘ₋ₘₐₓ).

9. Procédé de commande, selon l'une quelconque des revendications précédentes, **caractérisé en ce que** l'alimentation de l'élément de chauffage est coupée pendant toute la durée de la phase d'échappement du cylindre.

10. Procédé de commande, selon l'une quelconque des revendications précédentes, **caractérisé en ce que** l'alimentation de l'élément de chauffage est coupée pendant toute la durée de la phase de détente du cylindre.
